# EUROPÄISCHE PATENTSCHRIFT

(11) **EP 0 527 997 B1**
(45) Veröffentlichungstag und Bekanntmachung des Hinweises auf die Patenterteilung: **03.08.1994**
(21) Anmeldenummer: 92905901.2
(22) Anmeldetag: 09.03.1992
(51) Int. Cl.: G02C 9/00

(54) **KOMBINATIONSBRILLE**
COMBINATION SPECTACLES
LUNETTES UNIVERSELLES

(30) Priorität: 08.03.1991 DE 4107507; 10.05.1991 DE 4115416
(43) Veröffentlichungstag der Anmeldung: 24.02.1993
(73) Patentinhaber: FERDINAND MENRAD GMBH & CO. KG, D-73522 Schwäbisch Gmünd (DE)
(72) Erfinder: KLEILE, Armin, D-8130 Starnberg (DE); FEIFEL, Manfred, D-7070 Schwäbisch Gmünd (DE); OCKER, KLAUS, 73540 Heubach (DE); DOMHAN, REINHOLD, 73527 Schwäbisch Gmund (DE); MÜLLER-MENRAD, BERNHARD, 82335 Berg/Starnberger See (DE)
(74) Vertreter: Grättinger, Günter
(86) Internationale Anmeldenummer: EP9200516
(87) Internationale Veröffentlichungsnummer: WO9215917

(56) Entgegenhaltungen:
- EP-A- 0 194 065
- FR-A- 2 643 728
- GB-A- 0 777 004
- GB-A- 2 184 862
- US-A- 2 949 609
- US-A- 3 383 707
- US-A- 4 247 178
- US-A- 4 740 069

## Beschreibung

Die vorliegende Erfindung betrifft eine Kombinationsbrille, bestehend aus einem Brillengestell und einem an diesem lösbar befestigbaren Vorstecker als austauschbare Brillenfront. Sie betrifft ferner die einzelnen Komponenten der Kombinationsbrille, d.h. erfinderische Ausgestaltungen sowohl des Brillengestells als auch des Vorsteckers, sowie ein Verfahren zum Befestigen des Vorsteckers auf einem Brillengestell.

Übliche Sonnenvorhänger für Brillen besitzen eine Fassung, die die getönten Gläser aufnimmt und an der federnde Haken angeordnet sind, welche das Brillengestell bei aufgesetztem Sonnenvorhänger umgreifen. Dabei ist von Nachteil, daß die Haken das Brillengestell oder die darin gefaßten Gläser beim Aufsetzen beschädigen können. Darüber hinaus sind durch die scharfkantigen Haken unter Umständen Verletzungen im Augenbereich möglich. Schließlich sind die das Brillengestell umgreifenden Haken im allgemeinen deutlich sichtbar und daher unter ästhetischen Gesichtspunkten unerwünscht.

Aus GB 2 184 862 A sind ein Vorstecker und Verblendungsteile für ein Brillengestell bekannt, wobei die Befestigungselemente als Stift/Loch-Verbindung ausgestaltete Clip-Verschlüsse sind. Unterschiedliche Dehnungen der miteinander verbundenen Teile können hier nicht ausgeglichen werden, so daß z.B. die Materialwahl von vorneherein beschränkt ist. Hinzu kommt die Schwierigkeit, daß die Verbindungselemente innerhalb enger Toleranzen positioniert werden müssen. Zudem verlieren Druckknopfverbindungen durch häufiges Wechseln rasch die erforderliche Festigkeit.

Schließlich ist aus GB 777 004 ein Verblendungsteil für einen Augenbogen eines Brillengestells bekannt, mit zwei Stift/Loch-Verbindungen, wobei jeder Augenbogen ein Langloch mit einem erweiterten Endabschnitt und ein kreisrundes Loch besitzt, in welche auf der Rückseite des jeweiligen Verblendungsteils angebrachte Stifte mit verdickten Köpfen eintreten; die Verbindung wird durch einen Schwenkhaken, welcher den Kopf des durch das kreisrunde Loch hindurchtretenden Stifts hintergreift, gesichert. Diese bekannte Verbindung ist aufwendig in der Herstellung und umständlich zu betätigen. Für ein Brillengestell werden zwei Verblendungsteile benötigt.

Bei einem anderen, aus der US-PS 4 812 031 bekannten Vorstecker, welcher sich über die gesamte Frontbreite des Brillengestells erstreckt, ist nur eine Verbindung im Bereich der Brücke vorgesehen, welche als Rastverbindung mit länglichen, in Richtung der Brücke erstreckten Rastelementen, die ein Aufstecken von vorne ermöglichen, ausgebildet ist. Die Rastverbindung dient gleichzeitig als Scharnier, welches ein Verschwenken des Vorsteckers um eine horizontale Achse ermöglicht. Dieser bekannte Vorstecker ist zwar durchaus zweckmäβig für die Bedürfnisse des Jägers; als modisches Element ist er jedoch ungeeignet, da er verhältnismäßig stark dimensioniert sein muß, damit er die nötige Formstabilität erhält.

Der vorliegenden Erfindung liegt die Aufgabe zugrunde, eine ästhetisch ansprechende Kombinationsbrille mit unsichtbarer Verbindung zwischen einem Brillengestell und einem an ihm befestigten Vorstecker zu schaffen. Dabei soll der Austausch des Vorsteckers gegen einen anderen unproblematisch und rasch durchzuführen sein und den Ausgleich unterschiedlicher Dehnungen von Brillengestell und Vorstecker ermöglichen.

Gemäß der Erfindung wird diese Aufgabe bei einem Brillengestell, welches mindestens ein Querteil mit Nasenauflagen und zwei Bügel umfaßt, wobei der Querteil in seiner Vorderfront nahe den Enden jeweils eine Vertiefung besitzt, welche geeignet ist, einen Vorsprung auf der Rückseite eines Vorsteckers aufzunehmen, gemäß dem Kennzeichen von Anspruch 1 gelöst.

Die den Vorstecker mit dem Brillengestell verbindende Rastverbindung ist nicht nur unsichtbar; der Vorstecker kann zudem bei Vermeidung eines Spalts zwischen den beiden Teilen dicht auf dem Brillengestell aufliegen. Die Rastverbindung zwischen dem Vorstecker und dem Brillengestell ermöglicht ein leichtes Abnehmen bzw. Anbringen des Vorsteckers, so daß der Benutzer ohne großen Aufwand und innerhalb kürzester Zeit das Aussehen seiner Brille verändern, beispielsweise seiner Kleidung oder der Umgebung anpassen kann.

Dadurch, daß die Vertiefungen in Längsrichtung des Querteils länger sind als die Vorsprünge, sind ideale Voraussetzungen für einen Dehnungsausgleich zwischen Vorstecker und Brillengestell geschaffen. Der Vorstecker kann dabei der Krümmung des Brillengestells exakt folgen. Für beide Teile können jeweils die geeignetsten, also auch unterschiedliche Materialien verarbeitet werden, da durch den gewährleisteten Dehnungsausgleich weder Spannungen noch Verwerfungen der miteinander verbundenen Teile entstehen können. Ein solcher Dehnungsausgleich ist insbesondere dort vorzusehen, wo das Brillengestell und der Vorstecker aus verschiedenen, auf Luftfeuchtigkeitsschwankungen mit unterschiedlicher Dehnung reagierenden Kunststoffen bestehen.

Der Vorstecker weist bevorzugt eine Sonnenschutzverglasung auf. Das Brillengestell ist dabei je nachdem, ob eine optische Korrektur erforderlich ist oder nicht, als Trägergestell mit in angesetzten Augenringen aufgenommenen Korrektionsgläsern (Korrekturfassung) oder aber als reines Trägergestell ausgebildet. Das Trägergestell besteht zweckmäßig aus Metall, während die Augenringe aus Kunststoff hergestellt sind.

Sofern der verwendete Rastmechanismus über ein federndes Element verfügt, kann dieses in gleicher Weise an den Vorsprüngen wie an den Vertiefungen angeordnet sein. Insbesondere können federnde Zungen, Klauen und dergleichen Bestandteil der Vorsprünge selber, oder aber in den Vertiefungen aufgenommen sein.

Wenn ein Brillengestell als Korrekturfassung mit eingesetzten optischen Gläsern verwendet wird, kann das Brillengestell ggf. auch ohne Vorstecker getragen werden, wobei die Vertiefungen durch entsprechende Abdeckkappen verdeckt und somit unsichtbar sein können.

Besonders vorteilhaft ist die Ausgestaltung der Rastverbindung in der Weise, daß die Vertiefungen aus Langlöchern bestehen, die sich in Längsrichtung des Querteils erstrecken und jeweils zur Brillenmitte hin mit einer Erweiterung zum Einrasten von Vorsprüngen enden, welche einen schmalen Hals und einen dickeren Kopf besitzen. Die Vertiefungen bestehen dabei aus Langlöchern mit einer endseitigen Erweiterung, wobei die Bemessung der Langlöcher derart ist, daß jeweils der verdickte Kopf durch die Erweiterung hindurchtreten kann, nicht jedoch durch den schmalen Bereich jedes Langloches. Bei einem starren Trägergestell und einem flexiblen Vorstecker erfolgt dessen Aufsetzen dabei in der Weise, daß zunächst ein Stift in das entsprechende Langloch eingesetzt wird, woraufhin dann der Vorstecker etwas in Richtung der Gesichtswölbung überdehnt wird und somit die beiden Stifte aufeinanderzu bewegt werden, so daß der zweite Stift in das ihm zugeordnete Langloch eingesetzt werden kann. Anschließend springt der Vorstecker wieder in seine gestreckte Lage zurück und die Köpfe der Stifte sind verrastet.

Die vorstehend beschriebene Gestaltung der Rastverbindung ist besonders unempfindlich gegen ein im täglichen Gebrauch öfters vorkommendes Aufweiten des Brillengestells, da die Vorsprünge in den Langlöchern eine zur Mitte hin verschobene Position einnehmen können, ohne daß sich dadurch die Rastverbindung löst.

Das Brillengestell kann als Korrekturfassung zur Aufnahme einer optischen Verglasung ausgebildet sein, insbesondere durch Anordnung von Kunststoffaugenringen, in welche die optischen Gläser eingesetzt sind, an einem Trägergestell. In gleicher Weise kann das Brillengestell, wenn es lediglich der Aufnahme eines Vorsteckers dienen soll, als nach unten offenes Tragegestell ausgebildet sein, welches nicht zur Aufnahme einer optischen Verglasung vorgesehen ist. In diesem Falle verbinden lediglich obere Rahmenabschnitte die Brücke des Tragegestells mit den Backen, an denen die Bügel in bekannter Weise gelenkig befestigt sind. Die Ausgestaltung des Brillengestells als Tragegestell ermöglicht es, wenn der Vorstecker eine getönte Verglasung besitzt, auf einfachste Weise eine Vielzahl von Sonnenbrillen mit unterschiedlichem Design herzustellen, indem ein Tragegestell mit verschiedenen Vorsteckern kombiniert wird. Um die ästhetisch ansprechenden Kombinationsmöglichkeiten dabei nicht durch eine bestimmte Farbe des Brillengestells einzuschränken, kann dieses transparent ausgestaltet sein; es besteht dabei beispielsweise aus Polykarbonat oder Polyäthersulfon. Andererseits ist eine Herstellung des Trägergestells aus Metall aus Fertigkeitsgründen und weil es besonders dünn gestaltet werden kann durchaus zweckmäßig.

Die Brillenfront des Vorsteckers trägt bevorzugt eine aufkaschierte Folie, was in besonders einfacher Weise die Herstellung von unterschiedlichen Designs des Vorsteckers gestattet. Dabei ist das die Kaschierung tragende Element der Brillenfront bevorzugt aus Zelluloseacetat hergestellt.

Im folgenden wird die Erfindung anhand der Zeichnung näher erläutert. Es zeigt:
- Fig. 1: ein als Korrekturfassung ausgestaltetes Brillengestell einer erfindungsgemäßen Kombinationsbrille von vorn,
- Fig. 2: ein als Tragegestell ausgestaltetes Brillengestell einer erfindungsgemäßen Kombinationsbrille von vorn,
- Fig. 3: einen Schnitt entlang den Linien III - III in den Fig. 1 und 2 in stark vergrößerter Darstellung,
- Fig. 4: einen Vorstecker für eine erfindungsgemäße Kombinationsbrille von hinten,
- Fig. 5: einen Schnitt durch den Vorstecker gemäß Fig. 4 entlang der Linie V - V in stark vergrößerter Darstellung,
- Fig. 6: ein weiteres erfindungsgemäßes Trägergestell von vorn,
- Fig. 7: eine weitere erfindungsgemäße Korrekturfassung von vorn,
- Fig. 8: einen Vorstecker zum Aufsetzen auf Trägergestell bzw. Korrekturfassung gemäß den Fig. 6 und 7 von hinten und
- Fig. 9: den Vorstecker gemäß Fig. 8 von der Seite.

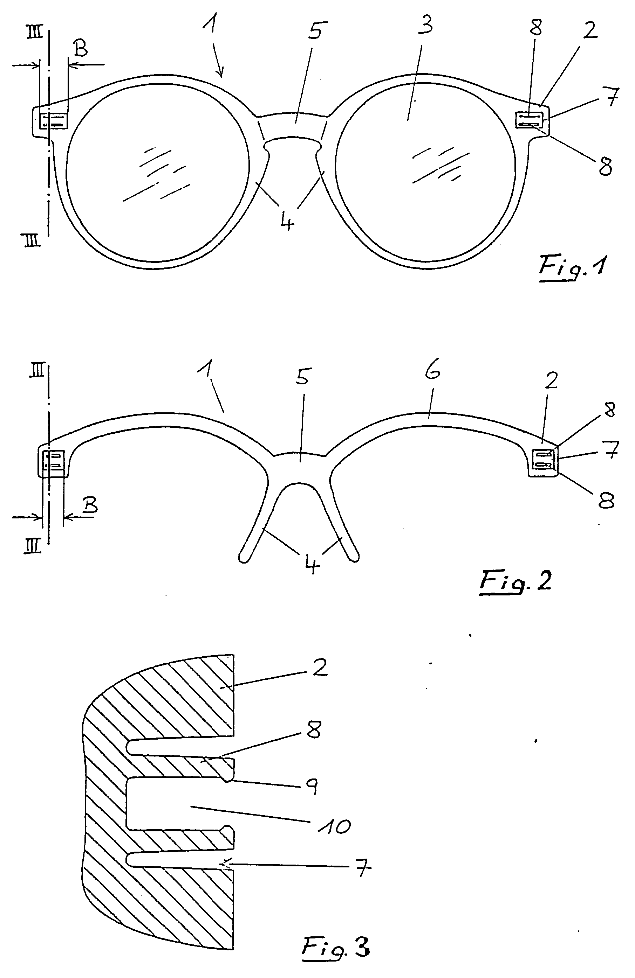

Das Brillengestell gemäß Fig. 1 besteht in bekannter Weise aus einem Querteil 1 und - nicht dargestellten - Bügeln, welche an den Backen 2 des Querteils mittels Scharnieren befestigt sind. Das Brillengestell trägt eine optische Verglasung 3.

Gemäß Fig. 2 ist das Querteil des Brillengestells als nach unten offenes Tragegestell ausgebildet. Es besitzt eine Nasenauflage 4 und beiderseits der Brücke 5 angeordnete Rahmenabschnitte 6, welche in Backen 2 enden. Eine optische Verglasung, wie sie in die Korrekturfassung gemäß Fig. 1 eingesetzt ist, besitzt das Tragegestell gemäß Fig. 2 nicht.

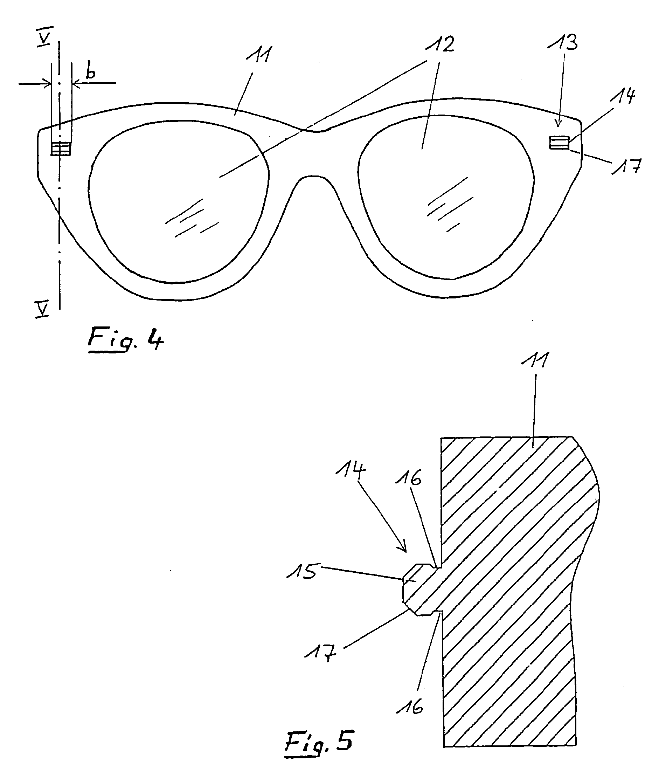

Die Backen 2 sowohl der Korrekturfassung gemäß Fig. 1 wie auch des Tragegestells gemäß Fig. 2 weisen an ihrer Vorderfront jeweils eine in der Draufsicht (Fig. 1 und 2) rechteckige Vertiefung 7 auf, welche Bestandteil einer Rastverbindung des jeweiligen Brillengestells mit einem an diesem befestigbaren Vorstecker darstellt. Gemäß Fig. 1 bis 3 sind innerhalb der Vertiefung 7 zwei federnde Klauen 8 vorgesehen. Diese besitzen eine längliche Erstreckung und sind horizontal, parallel zu einander ausgerichtet. Jede der Klauen 8 des Klauenpaares besitzt einen nach innen vorspringenden Ansatz 9, d.h. die beiden Ansätze 9 eines Klauenpaares sind gegeneinander gerichtet. Zwischen den Klauen 8 ist ein Hohlraum 10 gebildet, welcher der Aufnahme des an dem Vorstecker ausgebildeten Vorsprunges dient, wobei die Ansätze 9 der Klauen in entsprechende am Vorsprung vorgesehene Aufnahmen eingreifen, wie in Verbindung mit Fig. 5 ersichtlich und nachstehend erläutert.

Fig. 4 zeigt einen erfindungsgemäßen Vorstecker für Brillengestelle gemäß den Figuren 1 bis 3 in einer Draufsicht von hinten, d.h. Fig. 4 zeigt die dem Brillengestell zugewandte Seite des Vorsteckers. Der Vorstecker besteht aus einer Brillenfront 11, in welche eine Sonnenschutzverglasung 12 eingesetzt ist. In den beiden äußeren Ecken der Brillenfront, korrespondierend zu den Backen des Brillengestells gemäß den Fig. 1 und 2, sind Vorsprünge 13 angeordnet, welche in die Vertiefung 7 der Brillengestelle gemäß den Fig. 1 und 2 eingreifen und mit diesen gemeinsam eine Rastverbindung darstellen. Gemäß Fig. 5, welche einen vertikalen Schnitt durch die Brillenfront gemäß Fig. 4 im Bereich des Vorsprunges 13 zeigt (Linie V - V), ist dieser als horizontal verlaufender, länglicher Riegel 14 ausgebildet. Er besitzt einen Kopf 15 und zwei als Hinterschneidungen ausgebildete Aufnahmen 16, in welche die Ansätze 9 der Klauen 8 gemäß den Fig. 1 bis 3 eingreifen, wenn der Vorstecker auf das Brillengestell aufgesetzt wird. Der Kopf 15 des Riegels 14 weist dabei zwei Anschrägungen 17 auf, welche die beiden Klauen 8 zu Beginn der Montage des Vorsteckers auf dem Brillengestell spreizen, damit diese über den Kopf des Riegels gleiten können.

Die horizontale Erstreckung B der Vertiefungen 7 im Brillengestell ist geringfügig größer als die Querausdehnung b der Vorsprünge 13 des Vorsteckers. Hierdurch wird erreicht, daß der Vorstecker auch dann spannungsfrei auf dem jeweiligen Brillengestell sitzt, wenn sich die beiden Teile infolge unterschiedlicher Wärme- und/oder Feuchtigkeitsdehnung aufgrund unterschiedlichen Materials verschieden stark ausdehnen, wenn die entsprechenden Umgebungsbedingungen sich verändern.

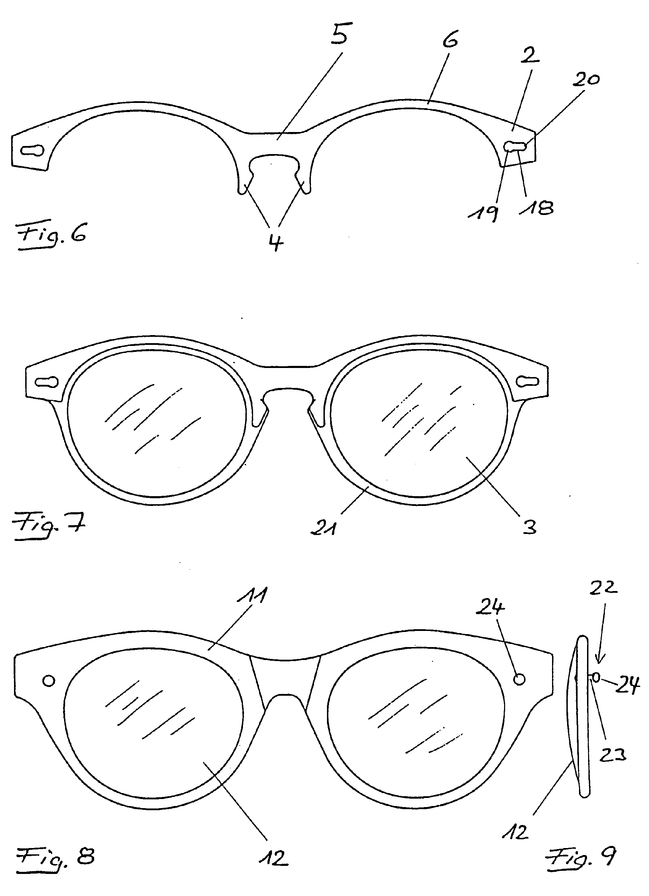

Das Brillengestell gemäß Fig. 6 ist als nach unten offenes Trägergestell ausgebildet. Es besitzt eine Nasenauflage 4 und beiderseits der Brücke 5 angeordnete Rahmenabschnitte 6, welche in Backen 2 enden. Beide Backen weisen jeweils ein Langloch 18 mit horizontaler Ausrichtung auf. Zur Mitte des Trägergestells hin besitzt jedes Langloch eine kreisförmige Erweiterung 19, deren Durchmesser größer ist als die lichte Weite des Langloches in dem sich nach außen anschließenden schmalen Teil 20.

Das Brillengestell gemäß Fig. 7 ist als Korrekturfassung ausgebildet. Es setzt sich aus dem Trägergestell gemäß Fig. 6 und zwei Augenrändern 21, welche der Aufnahme der optischen Verglasung 3 dienen, zusammen. Die Augenränder 21 bestehen aus Kunststoff; ihre Befestigung an dem aus Metall hergestellten Trägergestell erfolgt auf im Stand der Technik bekannte Art und Weise.

Der Vorstecker gemäß den Fig. 8 und 9 besteht aus einer Brillenfront 11, in welcher eine Sonnenschutzverglasung 12 eingesetzt ist. In den beiden äußeren Ecken der Brillenfront korrespondierend zu den Backen des Brillengestells gemäß den Fig. 6 und 7 sind Stifte 22 angeordnet, welche von der Brillenfront nach hinten vorspringen. Jeder Stift besitzt dabei einen Hals 23 und einen Kopf 24. Der Durchmesser des Kopfes 24 ist dabei geringfügig kleiner als der Durchmesser der Erweiterung 19 des zugeordneten Langloches 18 des Trägergestells; der Durchmesser des Halses 23 jedes Stiftes 22 ist geringfügig kleiner als die lichte Weite des schmalen Abschnittes 20 des Langloches 18. Der Abstand der beiden Stifte 22 des Vorsteckers voneinander in dessen spannungsfreiem Zustand entspricht dem Abstand der äußeren Enden der Langlöcher 18 voneinander. Wenn der Vorstecker gemäß Fig. 8 auf ein Brillengestell gemäß den Fig. 6 und 7 aufgesetzt ist, treten die Stifte 22 mit ihren Hälsen 23 somit durch die schmalen Bereiche 20 der Langlöcher 18 hindurch; die Köpfe 24, deren Durchmesser größer ist als die lichte Weite der schmalen Abstände 20 der Langlöcher, hintergreifen deren Kanten. Die Länge der Hälse 23 der Stifte ist dabei auf die Materialstärke des jeweiligen Trägergestells abgestimmt.

## Patentansprüche

1. Brillengestell, mindestens umfassend ein Querteil (1) mit Nasenauflagen (4) und zwei Bügel, wobei der Querteil in seiner Vorderfront nahe den Enden jeweils eine Vertiefung besitzt, welche geeignet ist, einen Vorsprung auf der Rückseite eines Vorsteckers aufzunehmen, derart, daß Vorsprung und Vertiefung zusammen eine Rastverbindung bilden,
dadurch gekennzeichnet,
daß die Vertiefungen in Längsrichtung des Querteils (1) länger sind als die darin einrastenden Vorsprünge und daß der Abstand zwischen den äußeren Enden der Vertiefungen derart ist, daß der Vorstecker darin spannungsfrei aufgenommen ist.

2. Brillengestell nach Anspruch 1,
dadurch gekennzeichnet,
daß die Vertiefungen jeweils einen in Querrichtung des Querteils (1) federnden Rastmechanismus umfassen.

3. Brillengestell nach Anspruch 1,
dadurch gekennzeichnet,
daß die Vertiefungen aus Langlöchern (18) bestehen, die sich in Längsrichtung des Querteils erstrecken und jeweils zur Brillenmitte hin mit einer Erweiterung (19) zum Einrasten von Vorsprüngen enden, welche einen schmalen Hals (23) und einem dickeren Kopf (24) besitzen.

4. Vorstecker als Brillenfront für ein Brillengestell nach einem der Ansprüche 1 bis 3, mit zu den Vertiefungen im Brillengestell korrespondierenden Vorsprüngen auf seiner Rückseite,
dadurch gekennzeichnet,
daß der Abstand der Vorsprünge voneinander derart ist, daß diese zwischen den äußeren Enden der Vertiefungen des Querteils so aufgenommen sind, daß sich der Vorstecker dabei in spannungsfreiem zustand befindet.

5. Kombinationsbrille bestehend aus einem Brillengestell nach einem der Ansprüche 1 bis 3 und einem Vorstecker nach Anspruch 4.

6. Kombinationsbrille nach Anspruch 5,
dadurch gekennzeichnet,
daß die Vorsprünge des Vorsteckers als Stifte (22) mit verdicktem Kopf (24) und schlankem Hals (23) und die Vertiefungen des Brillengestells als Langlöcher (18) mit einem schmalen brillenäußeren Abschnitt (20) und einer Erweiterung (19) zur Brillenmitte hin ausgebildet sind, wobei der Kopfdurchmesser geringfügig kleiner ist als jener der Erweiterung (19) des Langloches (18) und wobei der Halsdurchmesser geringfügig kleiner ist als die lichte Weite des schmalen Abschnitts (20) der Langlöcher (18) derart, daß der schlanke Hals (23) jedes Stiftes (22) im Bereich des schmalen Abschnitts (20) des zugeordneten Langlochs (18) aufgenommen ist.

7. Kombinationsbrille nach Anspruch 5,
dadurch gekennzeichnet,
daß das Brillengestell aus transparentem Werkstoff besteht.

8. Kombinationsbrille nach Anspruch 5,
dadurch gekennzeichnet,
daß der Vorstecker aus Zelluloseacetat besteht.

9. Kombinationsbrille nach Anspruch 5,
dadurch gekennzeichnet,
daß der Vorstecker eine getönte Verglasung (12) aufweist.

10. Kombinationsbrille nach Anspruch 5,
dadurch gekennzeichnet,
daß das Brillengestell eine optische Verglasung (3) aufweist.

11. Verfahren zum Befestigen eines Vorsteckers auf einem Brillengestell bei einer Kombinationsbrille nach Anspruch 6,
dadurch gekennzeichnet,
daß der Vorstecker unter Verkürzung des Abstands der beiden Stifte (22) aufgesetzt wird, wobei deren Köpfe (24) durch die Erweiterung (19) der Langlöcher (18) hindurchtreten, und danach wieder freigegeben wird, so daß er wieder in seine gestreckte Lage zurückspringt, wobei in diesem spannungslosen Zustand des Vorsteckers die Kanten der Langlöcher (18) im Bereich ihrer schmalen Abschnitte (20) hintergreifen.

## Claims

1. Spectacle frame, at least comprising a cross member (1) with nose supports (4) and two arms, in its front close to the ends the cross member respectively comprising a recess, which is suitable for receiving a projection on the rear side of an attachable frame so that the projection and recess together form a locking connection, characterised in that in the longitudinal direction of the cross member (1), the recesses are longer than the projections engaging therein and that the distance between the outer ends of the recesses is such that the attachable frame is received therein free from tension.

2. Spectacle frame according to Claim 1, characterised in that the recesses respectively comprise a locking mechanism which is flexible in the transverse direction of the cross member (1).

3. Spectacle frame according to Claim 1, characterised in that the recesses consist of slots (18), which extend in the longitudinal direction of the cross member and respectively towards the centre of the spectacles end with an enlargement (19) for the engagement of projections, which have a narrow neck (23) and a thicker head (24).

4. Attachable frame as a spectacle front for a spectacle frame according to one of Claims 1 to 3, with projections on its rear side corresponding to the recesses in the spectacle frame, characterised in that the distance of the projections from each other is such that the latter are received between the outer ends of the recesses in the cross member so that the attachable frame is thus located in a tension-free state.

5. Combination spectacles consisting of a spectacle frame according to one of Claims 1 to 3 and an attachable frame according to Claim 4.

6. Combination spectacles according to Claim 5, characterised in that the projections of the attachable frame are constructed as pins (22) with a thickened head (24) and narrow neck (23) and the recesses of the spectacle frame are constructed as slots (18) with a narrow section (20) on the outside of the frame and an enlargement (19) towards the centre of the frame, the diameter of the head being slightly smaller than that of the enlargement (19) of the slot (18) and the diameter of the neck being slightly less than the inside width of the narrow section (20) of the slots (18) so that the narrow neck (23) of each pin (22) is received in the region of the narrow section (20) of the associated slot (18).

7. Combination spectacles according to Claim 5, characterised in that the spectacle frame consists of transparent material.

8. Combination spectacles according to Claim 5, characterised in that the attachable frame consists of cellulose acetate.

9. Combination spectacles according to Claim 5, characterised in that the attachable frame has tinted glass (12).

10. Combination spectacles according to Claim 5, characterised in that the spectacle frame has optical lenses (3).

11. Method for fastening an attachable frame to a spectacle frame in combination spectacles according to Claim 6, characterised in that the attachable frame is fitted by shortening the distance between the two pins (22), their heads (24) passing through the enlargement (19) of the slots (18) and then being released again, so that it springs back into its elongated position, in this tension-free state of the attachable frame, the edges of the slots (18) engaging behind in the region of their narrow sections (20).

## Revendications

1. Monture de lunettes comportant au moins une partie transversale (1) équipée de plaquettes (4) et deux branches, la partie transversale étant pourvue dans sa façade à proximité des extrémités de, respectivement, un évidement apte à recevoir une saillie disposée sur la face arrière d'une face supplémentaire de telle sorte que la saillie et l'évidement forment ensemble une fixation par encliquetage, caractérisée en ce que les évidements dans le sens longitudinal de la partie transversale (1) sont plus longs que les saillies qui s'y introduisent et que l'écartement entre les deux extrémités extérieures des évidements est tel que la face supplémentaire y loge sans tension.

2. Monture de lunettes selon la revendication 1, caractérisée en ce que les évidements comportent respectivement un mécanisme d'encliquetage élastique en direction de la largeur de la partie transversale (1).

3. Monture de lunettes selon la revendication 1, caractérisée en ce que les évidements se composent de trous oblongs (18) qui s'étendent dans le sens de la longueur de la partie transversale et se terminent en direction du centre de la monture dans un élargissement (19) destiné à l'encliquetage de saillies, lesquelles ont un collet mince (23) et une tête large (24).

4. Face supplémentaire servant de façade pour une monture de lunettes selon l'une quelconque des revendications 1 à 3, comportant sur sa face arrière des saillies correspondant aux évidements de la monture, caractérisée en ce que l'écartement entre les saillies permet à ces dernières de se placer entre les extrémités extérieures des évidements de la partie transversale de telle sorte que la face supplémentaire soit exempte de tension.

5. Lunettes universelles comportant une monture de lunettes selon l'une quelconque des revendications 1 à 3 et une face supplémentaire selon la revendication 4.

6. Lunettes universelles selon la revendication 5, caractérisées en ce que les saillies de la face supplémentaire se présentent sous forme de goupilles (22) à tête large (24) et collet étroit (23), et que les évidements dans la monture de lunettes se présentent sous forme de trous oblongs (18) comportant une partie étroite (20) vers le bord extérieur des lunettes et un élargissement (19) vers le centre des lunettes, le diamètre de la tête étant légèrement plus petit que celui de l'élargissement (19) du trou oblong (18) et le diamètre du collet étant légèrement plus petit que l'ouverture de la partie étroite (20) des trous oblongs (18) de telle sorte que le collet (23) mince de chaque goupille (22) se place au niveau de la partie étroite (20) du trou oblong (18) correspondant.

7. Lunettes universelles selon la revendication 5, caractérisées en ce que la monture de lunettes est faite dans un matériau transparent.

8. Lunettes universelles selon la revendication 5, caractérisées en ce que la face supplémentaire est en acétate de cellulose.

9. Lunettes universelles selon la revendication 5, caractérisées en ce que la face supplémentaire est pourvue de verres teintés (12).

10. Lunettes universelles selon la revendication 5, caractérisées en ce que la monture de lunettes est pourvue de verres optiques (3).

11. Procédé de fixation d'une face supplémentaire sur une monture de lunettes dans le cas de lunettes universelles selon la revendication 6, caractérisé en ce qu'on fixe la face supplémentaire en réduisant l'écart entre les deux goupilles (22) dont les têtes (24) passent à travers l'élargissement (19) des trous oblongs (18) et qu'on la libère ensuite pour qu'elle reprenne sa position allongée, étant précisé que lorsque la face supplémentaire se trouve dans cet état exempt de tension, les bords des trous oblongs (18) au niveau de leurs parties étroites (20) exercent une action de prise.
